# EUROPÄISCHE PATENTSCHRIFT

(11) **EP 2 108 879 B1**
(45) Veröffentlichungstag und Bekanntmachung des Hinweises auf die Patenterteilung: **26.10.2011**
(21) Anmeldenummer: 08103441.5
(22) Anmeldetag: 08.04.2008
(51) Int. Cl.: F16P 3/14, G01V 8/20

(54) **Verfahren und Vorrichtung zur Überwachung eines Durchgangs**
Method and device for security monitoring of a passage
Procédé et dispositif destinés à la surveillance d'un passage

(43) Veröffentlichungstag der Anmeldung: 14.10.2009
(73) Patentinhaber: SICK AG, 79183 Waldkirch (DE)
(72) Erfinder: Pirkl, Klaus, 64572 Büttelborn (DE); Grabinger, Jörg, 79312 Emmendingen (DE)
(74) Vertreter: Ludewigt, Christoph

(56) Entgegenhaltungen:
- EP-A- 0 558 368
- EP-A- 1 331 433
- EP-A- 1 873 442
- EP-A- 1 876 383
- CA-A1- 1 093 192
- US-A- 4 015 122
- US-A1- 2002 017 603

## Beschreibung

Die Erfindung betrifft ein Verfahren zur Sicherheitsüberwachung eines Durchgangs gemäß dem Oberbegriff des Patentanspruchs 1 sowie eine Vorrichtung zur Durchführung dieses Verfahrens gemäß dem Oberbegriff des Patentanspruchs 9.

Diese bekannten Verfahren und Vorrichtungen dienen zur Absicherung von Durchgängen, durch welche bestimmte zulässige Objekte in einen Gefahrenbereich eintreten oder aus diesem austreten, während ein Eintreten oder Austreten von nicht zulässigen Objekten, insbesondere von Personen verhindert werden soll. Anwendungen sind z. B. die Zugangssicherung von automatischen Fertigungsanlagen, die Absicherung von Einfahrtsöffnungen zu Fertigungszellen, die Absicherung von Abkantpressen und Palletieranlagen, die Transporttechnik, die Förder- und Lagertechnik, die Verpackungsindustrie, der Maschinenbau und die Automobilindustrie.

Es ist bekannt, solche Durchgänge durch ein Lichtgitter abzusichern, bei welchem in einer Reihe angeordnete Sendeeinheiten Lichtstrahlen aussenden, die von entsprechend angeordneten Empfangseinheiten empfangen werden. Die Unterbrechung der Lichtstrahlen signalisiert den Durchtritt eines Objektes. Falls ein nicht zulässiges Objekt das Lichtgitter durchtritt, wird eine Sicherheitsfunktion, z. B. ein Alarm, ausgelöst, eine gefährdende Produktionsmaschine abgeschaltet oder dergleichen. Damit die zulässigen Objekte durch den abgesicherten Durchgang hindurchtreten können, wird das sogenannte Muting-Verfahren angewendet, bei welchem ein zulässiges Objekt erkannt wird und die Sicherheitsfunktion unterdrückt wird, wenn das Lichtgitter von einem als zulässig identifizierten Objekt durchtreten wird.

Aus der DE 103 15 667 A1 ist es bekannt, vor dem Lichtgitter weitere Lichtschranken anzubringen, die beim Durchtritt eines Objektes die Muting-Funktion des Lichtgitters bewirken. Bei einem zulässigen Objekt tritt dieses durch das Lichtgitter durch, solange die vorgeschaltete Lichtschranke durch dieses Objekt unterbrochen ist, so dass das zulässige Objekt das Lichtgitter passieren kann, ohne die Sicherheitsfunktion auszulösen. Passiert z. B. ein Mensch die vorgeschaltete Lichtschranke, so gibt er diese wieder frei, bevor er das Lichtgitter passiert, so dass die Muting-Funktion rechtzeitig beendet ist, bevor der Mensch das Lichtgitter passiert, und die Sicherheitsfunktion wird ausgelöst. Die vor und hinter dem Lichtgitter angeordneten zusätzlichen Lichtschranken vergrößern die Abmessungen der Sicherheitsvorrichtung in Transportrichtung der Objekte. Die Anordnung der vorund nachgeschalteten Lichtschranken hängt von den Dimensionen der zulässigen Objekte ab, so dass eine Absicherung nur bei Objekten möglich ist, die sich ausreichend von nicht zulässigen Objekten, insbesondere dem menschlichen Körper, unterscheiden.

Aus der DE 103 29 881 A1 ist ein Verfahren und eine Vorrichtung der eingangs genannten Gattung bekannt, bei welchem durch die parallel in einer Ebene angeordneten Lichtstrahlen des Lichtgitters ein durch das Lichtgitter durchtretendes Objekt abgetastet wird. Ein dem Lichtgitter vorgeschalteter Positionssensor zeigt an, dass ein Objekt das Lichtgitter durchtritt. In vorgegebenen Zeitabständen werden die Signale aller Empfangselemente des Lichtgitters aufgenommen und bilden ein Bitmuster, das letztendlich angibt, welche Lichtstrahlen unterbrochen und welche nicht unterbrochen sind. Die aufgenommenen Bitmuster werden mit entsprechenden, das heißt den Abtastschritten entsprechenden, abgespeicherten Bitmustern eines zulässigen Objektes verglichen. Stimmen die Bitmuster überein, wird die Auslösung der Sicherheitsfunktion unterdrückt. Ergeben sich Abweichungen von dem gespeicherten Bitmuster, wird die Sicherheitsfunktion ausgelöst. Das zeitlich getaktete Abtasten und Vergleichen mit den gespeicherten Bitmustern setzt voraus, dass das Objekt immer mit einer vorgegebenen Geschwindigkeit durch das Lichtgitter transportiert wird. Bei einem Lichtgitter mit einer größeren Anzahl von übereinander parallel verlaufenden Lichtstrahlen, z. B. etwa 200 Lichtstrahlen und einer größeren Transportgeschwindigkeit der Objekte, erfordert dieses Verfahren eine große Speicherkapazität für die abgelegten Bitmuster und einen hohen Aufwand für den schnellen Vergleich der aufgenommenen Bitmuster mit den hinterlegten Bitmustern.

D1 offenbart ein Lichtgitter mit der Möglichkeit Objekte auszublenden. Eine Ausblendung basiert dabei auf dem Verfahren, dass die Gesamtzahl der unterbrochenen Strahlachsen mit einer erlaubten Anzahl von Unterbrechungen verglichen wird, und abhängig von diesem Vergleich, das Objekt als zulässig oder unzulässig eingestuft wird.

Aus D2 ist ein Verfahren und eine Vorrichtung bekannt, um Gegenstände auf einem Förderband zu detektieren. Auf dem Förderband befinden sich Beladeflächen, die mit Objekten an einer Station beladen werden. An einer Entladestation sollen die Objekte identifiziert werden. Zur Erkennung der Objekte werden Reflexionen der Objekte ausgewertet. Zur genauen Identifizierung weist die Beladefläche in Reihen angeordnete Marken auf, von denen sich ein Objekt optisch abhebt.

Aus D3 ist ein Lichtgitter bekannt, bei dem zur permanenten Ausblendung von Lichtstrahlen, die empfangenen Strahlen abgezählt werden und mit abgelegten Werten verglichen werden.

Aus D4 ist es bekannt, bei einem abgedeckten Bereich einer Ausblendung im Lichtgitter auch die im Randbereich teilweise abgedecken Strahlen zu berücksichtigen, um zu entscheiden, ob das Objekt als zulässig oder unzulässig anzusehen ist.

Der Erfindung liegt die Aufgabe zugrunde, ein Verfahren und eine Vorrichtung zur Absicherung eines Durchgangs zu schaffen, die eine hohe Zuverlässigkeit mit einem geringeren Aufwand gewährleisten.

Diese Aufgabe wird erfindungsgemäß gelöst durch ein Verfahren mit den Merkmalen des Anspruchs 1 sowie durch eine Vorrichtung mit den Merkmalen des Anspruchs 9.

Anspruch 1 betrifft ein Verfahren zur Überwachung eines Schutzfeldes, durch welches Objekte transportiert werden, bei dem das Schutzfeld durch wenigstens ein Lichtgitter, mit einer Vielzahl jeweils Sendeelementen und Empfangselementen des Lichtgitters zugeordneten parallelen Lichtstrahlen, in einer Ebene quer zur Transportrichtung gebildet wird. Beim Transport eines Objektes durch das Schutzfeld werden in zeitlich aufeinander folgenden Abtastschritten die Signale aller Empfangselemente des Lichtgitters aufgenommen und die Signale eines Abtastschrittes bilden ein Objekt-Bitmuster. Es werden Referenz-Bitmuster eines zulässigen Objektes aufgenommen und nach Vergleich der Objekt-Bitmuster mit den Referenz-Bitmustern wird ein Sicherheitssignal vom Lichtgitter ausgegeben, wenn die Objekt-Bitmuster des Objektes mit den Referenz-Bitmustern nicht übereinstimmen. Erfindungsgemäß wird dazu bei Durchgang eines Objektes jeweils wenigstens eine Häufigkeit identischer Objekt-Bitmuster erfasst und dem jeweiligen Objekt-Bitmuster zugeordnet abgespeichert und die so ermittelte Häufigkeit mit der entsprechenden Häufigkeit der Referenz-Bitmuster verglichen. Das Sicherheitssignal wird nur dann ausgelöst, wenn die ermittelte Häufigkeit nicht mit der Häufigkeit der Referenz-Bitmuster übereinstimmt.

Bei dem erfindungsgemäße Verfahren kann somit auf die Zulässigkeit eines Objektes durch einfachsten Vergleich von Zahlen geschlossen werden, indem wenigstens eine Häufigkeit identisch vorkommender Objekt-Bitmuster mit der entsprechenden Häufigkeit der Referenz-Bitmuster des Referenzobjektes verglichen wird. Dadurch bleibt der Aufwand der Auswertung auch bei einem Lichtgitter mit einer Vielzahl von Lichtstrahlen und somit einer hohen Auflösung gering und eine hohe Transportgeschwindigkeit der zu erfassenden Objekte ist möglich. Es sind keine zu dem Lichtgitter zusätzlichen Sensoren zur Erfassung und Abtastung der Objekte erforderlich, die den Aufwand und die räumlichen Abmessungen der Sicherheitsüberwachung vergrößern und die Zuverlässigkeit beeinträchtigen könnten. Das Verfahren ist dabei auf beliebige Objektformen anwendbar. Das Verfahren ist auch unabhängig von einer Transportrichtung, da lediglich Häufigkeiten übereinstimmen müssen, um das Objekt zuzulassen. Somit kann das Objekt auch bei gleicher Transportrichtung um 180° gedreht werden, was einer geänderten Transportrichtung entsprechen würde. Auch hier würde das Objekt korrekt identifiziert werden.

In einer besonderen Ausführungsform wird zur Auswertung eines Objekt-Bitmusters nur ein Teil der Lichtstrahlen berücksichtigt, deren Abdeckung sich zwischen zwei Abtastschritten durch das Objekt ändert, wodurch eine Änderung der Signale der entsprechenden Empfangselemente erfolgt. Somit wird nicht ein gesamtes Bitmuster des Lichtgitters, mit in der Regel einer Vielzahl von Lichtstrahlen bei der Auswertung verwendet. Das zu überwachende, zulässige Objekt deckt eine Anzahl von Lichtstrahlen des Lichtgitters ab und lässt oberhalb und gegebenenfalls unterhalb der Objektkontur die Lichtstrahlen frei durchtreten. Diese Lichtstrahlen tasten die Kontur des durch das Lichtgitter transportierten Objektes ab und ermöglichen somit eine Formerkennung und Identifizierung des durchlaufenden Objektes. Dadurch wird die Datenmenge für die Abspeicherung von Referenz-Bitmuster deutlich verringert. Diese Häufigkeiten von identisch erfassten Objekt-Bitmustern werden mit in der Auswerteeinheit hinterlegten Häufigkeiten von entsprechenden Referenz-Bitmustern verglichen. Bei Übereinstimmung der Häufigkeiten wird die Auslösung der Sicherheitsfunktion unterdrückt.

In Weiterbildung der Erfindung werden für ein Referenzobjekt nur Häufigkeiten derjenigen Referenz-Bitmuster für den Vergleich herangezogen, die den Referenz-Bitmustern an charakteristischen Abtastschritten entsprechen. Dabei weist das Referenz-Bitmuster nur eine Starthöhe, eine Maximalhöhe und eine Endhöhe des Objekts auf. Dies ist beispielsweise bei Objekten wie einer Autokarosserie gegeben. Eine Motorhaube entspricht der Starthöhe, ein Autodach der Maximalhöhe und ein Kofferraum der Endhöhe. Das Objekt wird also nur durch drei signifikante Referenz-Bitmuster und deren Häufigkeiten klassifiziert. Diese drei unterschiedlichen Referenz-Bitmuster kommen jeweils mit einer bestimmten Häufigkeit bei der Abtastung mit dem Lichtgitter vor. Stimmen die Häufigkeiten der Objekt-Bitmuster von Starthöhe, Maximalhöhe und Endhöhe mit den Häufigkeiten der entsprechenden Referenz-Bitmuster überein, wird die Auslösung einer Sicherheitsfunktion unterdrückt, ansonsten wird die Sicherheitsfunktion ausgelöst.

Vorteilhaft weisen die Referenz-Bitmuster eine Toleranz auf. Wenn im Rahmen der Erfindung und ihrer Beschreibung von einer Auswertung des jeweils obersten und/oder untersten durch ein das Lichtgitter passierendes Objekt abgedeckten Lichtstrahles die Rede ist, so kann dies in der Realisierung selbstverständlich auch in der Weise durchgeführt werden, dass der jeweils erste oberhalb und/oder unterhalb des Objektes nicht abgedeckte Lichtstrahl ausgewertet wird und mit einer vorgesehenen Toleranz des Referenz-Bitmusters verglichen wird. Weiter werden in der Praxis, insbesondere wenn das Lichtgitter eine Vielzahl von Lichtstrahlen mit geringem Abstand aufweist, nicht nur ein oberster und/oder unterster abgedeckter Lichtstrahl ausgewertet, sondern einige vertikal aufeinanderfolgende Lichtstrahlen im Bereich der Konturform, um einen vertikalen Toleranzbereich in der Formerkennung zuzulassen, wodurch eine Störanfälligkeit der Sicherheitsüberwachung verringert wird.

In Weiterbildung der Erfindung werden aufeinander folgende Objekt-Bitmuster gezählt und aufgrund einer bekannten Transportgeschwindigkeit die Länge des Objektes ermittelt. Dadurch ist es einfach möglich, eine Länge von Objekten zu überprüfen. Die ermittelte Länge wird hierzu als zusätzliches Merkmal zur Überprüfung der Objekte herangezogen. Entspricht die sich aus der Zahl der Abtastschritte ergebende Länge nicht der Länge eines zulässigen Objekts, so wird die Sicherheitsfunktion ausgelöst.

In Weiterbildung der Erfindung wird die Häufigkeit bzw. Häufigkeiten gleicher Referenz-Bitmuster für die Änderungen der Konturform des Objektes in einem Teach-in-Zyklus eingelesen und in der Auswerteeinheit abgespeichert. Die Vorrichtung ist dadurch in einer Verwendung äußerst flexibel. Es können unterschiedliche zulässige Objekte, z. B. unterschiedliche Karosserieformen, überwacht werden, ohne dass hierzu ein Umbau oder eine Umrüstung der Vorrichtung erforderlich ist. Es müssen jeweils nur die unterschiedlichen Referenz-Bitmuster und deren jeweilige Häufigkeit über einen jeweiligen Teach-in-Zyklus in der Auswerteeinheit abgelegt und können dann jeweils nach Bedarf aufgerufen werden.

In einer weiteren Ausführungsform ist eine Überbrückungsfunktion vorgesehen, um die Sicherheitsfunktion zu überbrücken und keine Sicherheitsfunktion auszulösen. Ist beispielsweise ein unzulässiges Objekt detektiert worden, so wird ein Transportband für die Objekte und die gefahrbringende Bewegung abgeschaltet. Das Objekt kann sich jedoch noch im Erfassungsbereich des Lichtgitters befinden. Durch die Überbrückungsfunktion, die beispielsweise durch einen Überbrückungstaster oder einen Schlüsseltaster ausgelöst wird, wird die Sicherheitsfunktion überbrückt und das Transportband kann eingeschaltet werden, um das unzulässige Objekt unter Aufsicht einer Bedienperson aus dem Überwachungsbereich des Lichtgitters zu entfernen. Die Überbrückungsfunktion ist dabei nur aktivierbar, wenn sich ein Objekt in dem Erfassungsbereich des Lichtgitters befindet. Sobald der Durchgang wieder frei von Objekten ist, wird die Sicherheitsfunktion wieder aktiviert.

In Weiterbildung der Erfindung werden Objekt-Bitmuster zur Objektklassifikation über eine Schnittstelle ausgegeben. Dadurch können die Objekt-Bitmuster zum Zwecke einer Visualisierung, einer Qualitätskontrolle oder auch zur Verwaltung von Objekt-Bitmustern nebengeordneten Systemen über die Schnittstelle zur Verfügung gestellt werden. Durch die Ausgabe der Objekt-Bitmuster ist es auch möglich, nachfolgende Automatisierungsvorgänge entsprechend zu steuern oder zu beeinflussen. So kann beispielsweise abhängig von verschiedenen Objekten eine nachgeordnete automatische Sortierung vorgenommen werden.

Im Folgenden wird die Erfindung anhand eines schematischen Ausführungsbeispiels und der beigefügten Zeichnungen näher erläutert. Es zeigen:
- Fig. 1: schematisch eine Transporteinrichtung mit einem durch ein Lichtgitter abgesicherten Durchgang;
- Fig. 2: eine Darstellung zeitlich nacheinander aufgenommener Objekt- Bitmuster;
- Fig. 3 bis 3g: die Analyse der Objekt-Bitmuster bei einer Formerkennung eines Objektes.

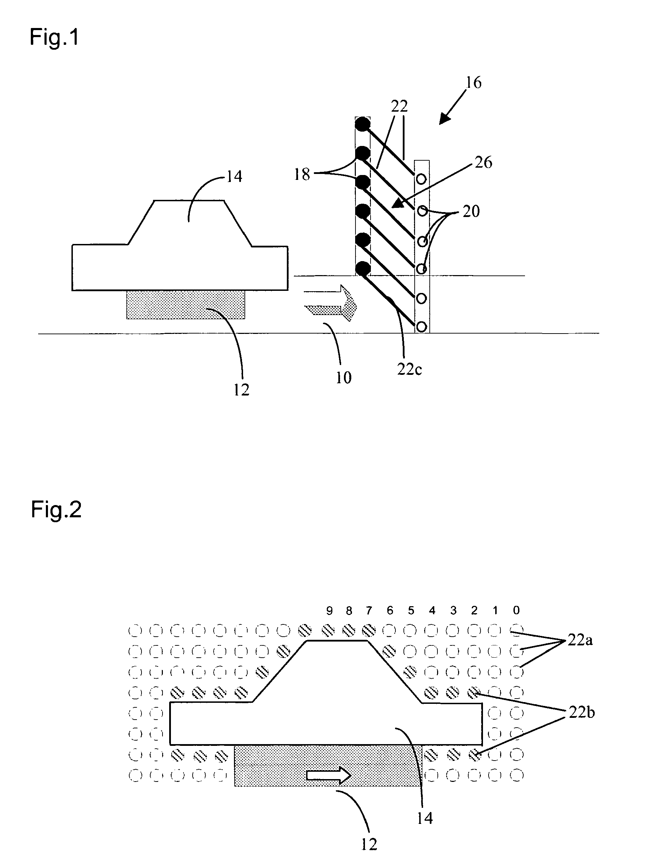

Das Verfahren und die Vorrichtung zur Sicherheitsüberwachung eines Gefahrenbereichs ist im Ausführungsbeispiel anhand des Durchgangs erläutert, durch welchen Fahrzeugkarosserien beispielsweise in eine Lackierzelle transportiert werden. Auf einem in Richtung des in Figur 1 eingezeichneten Pfeils laufenden Transportbands 10 sind Transporteinrichtungen 12 angeordnet, die jeweils eine Karosserie 14 tragen. Das Transportband 10 läuft durch einen Durchgang, der durch ein Lichtgitter 16 abgesichert ist. Das Lichtgitter 16 besteht aus einer vertikalen Leiste von übereinander angeordneten Sendeeinheiten 18 und einer gegenüber auf der anderen Seite des Durchgangs angeordneten entsprechenden vertikalen Leiste von übereinander angeordneten Empfangseinheiten 20. Die Sendeeinheiten 18 senden parallel, übereinander beabstandet, horizontal verlaufende Lichtstrahlen 22 aus, die in den jeweils zugeordneten Empfangseinheiten 20 empfangen werden. In der Zeichnung weist das Lichtgitter 16 zur schematischen Erläuterung nur einige wenige Lichtstrahlen 22 auf. In der Praxis werden Lichtgitter 16 verwendet, die eine wesentlich größere Anzahl von Lichtstrahlen 22 mit einem entsprechend geringen vertikalen Abstand aufweisen, um ein Lichtgitter 16 mit hoher Auflösung zu erhalten. In der Praxis werden Lichtgitter 16 verwendet, die je nach Höhe bis zu 240 Lichtstrahlen 22 aufweisen.

Die Sendeeinheiten 18 und die Empfangseinheiten 20 sind in nicht dargestellter und an sich bekannter Weise mit einer Auswerteeinheit verbunden, die das Aussenden und Empfangen der Lichtstrahlen steuert und überwacht und die Lichtsignale der Empfangseinheiten 20 verarbeitet.

Die zu überwachende zugelassene Karosserie 14 deckt bei Transport in das Schutzfeld 26 eine Vielzahl von Lichtstrahlen 22 des Lichtgitters 16 ab und lässt oberhalb und gegebenenfalls unterhalb der Karosserie 14 die Lichtstrahlen 22 frei durchtreten. Diese Lichtstrahlen 22 tasten die Kontur der durch das Lichtgitter 16 transportierten Karosserie 14 ab und ermöglichen somit eine Formerkennung und Identifizierung der durchlaufenden Karosserie 14. Die Häufigkeit von identisch erfassten Objekt-Bitmustern wird mit einer in der Auswerteeinheit hinterlegten Häufigkeit von identischen Referenz-Bitmuster verglichen. Bei Übereinstimmung wird die Auslösung der Sicherheitsfunktion unterdrückt.

In Figur 2 ist dargestellt, wie die Formkontur eines Objektes, im Ausführungsbeispiel der Karosserie 14, beim Durchtritt durch das Lichtgitter 16 erfasst wird. Die nebeneinander gezeichneten und mit "0,1,2,3....." bezeichneten Spalten stellen die Lichtstrahlen 22 dar, wie sie sich in zeitlich aufeinanderfolgenden Abtastschritten ergeben, wenn die Karosserie 14 in Pfeilrichtung transportiert wird. Jeweils eine Spalte bildet ein Objekt-Bitmuster. Die Lichtstrahlen 22, die durch die Karosserie 14 nicht abgedeckt sind, sind als offene Kreise gezeichnet und mit 22a bezeichnet. Die jeweils durch die Karosserie 14 abgedeckten Lichtstrahlen 22, die nicht in die Empfangseinheiten 20 gelangen, sind dagegen nicht dargestellt.

Das Lichtgitter 16 sperrt den Durchgang zu dem Gefahrenbereich vollständig ab. Ist die Sicherheitsüberwachung aktiv, so treffen alle von den Sendeeinheiten 18 ausgesandten Lichtstrahlen 22 als freie Lichtstrahlen 22a auf die zugehörigen Empfangseinheiten 20 (z. B. bei Abtastschritten 0 und 1). Dies wird in der Auswerteeinheit überwacht. Die sich in dem Gefahrenbereich befindenden Maschinen und Anlagen werden für den Betrieb freigegeben.

Werden eine oder mehrere der Lichtstrahlen 22 abgedeckt, so wird dies in der Auswerteeinheit festgestellt und die Auswerteeinheit löst eine Sicherheitsfunktion aus, die z. B. darin bestehen kann, dass ein Alarmsignal abgegeben wird, dass gefährliche Anlagen und Maschinen abgeschaltet werden oder dergleichen.

Damit diese Sicherheitsfunktion nur dann ausgelöst wird, wenn ein unerlaubtes oder unzulässiges Objekt, insbesondere z. B. ein Mensch, den durch das Lichtgitter 16 abgesicherten Durchgang passiert, nicht jedoch, wenn ein zulässiges Objekt, z. B. die Karosserie 14, den Durchgang passiert, ist eine Unterdrückung der Sicherheitsfunktion vorgesehen.

Tritt bei der erfindungsgemäßen Sicherheitsüberwachung das zulässige Objekt, nämlich die Karosserie 14, in das Lichtgitter 16 ein, so deckt die Karosserie 14 jeweils einige Lichtstrahlen 22 ab, die zuvor als freie Lichtstrahlen 22a in die Empfangseinheiten 20 gelangen konnten. In Figur 2 sind jeweils der oberste und der unterste durch die Umfangskontur der Karosserie 14 freigelassene Lichtstrahl 22b im Verlauf des Durchtritts der Karosserie 14 durch das Lichtgitter 16 gezeigt. Durch diese obersten und untersten freien Lichtstrahlen 22b wird somit die Außenkontur der Karosserie 14 in der Projektionsebene der Lichtstrahlen 22 abgetastet.

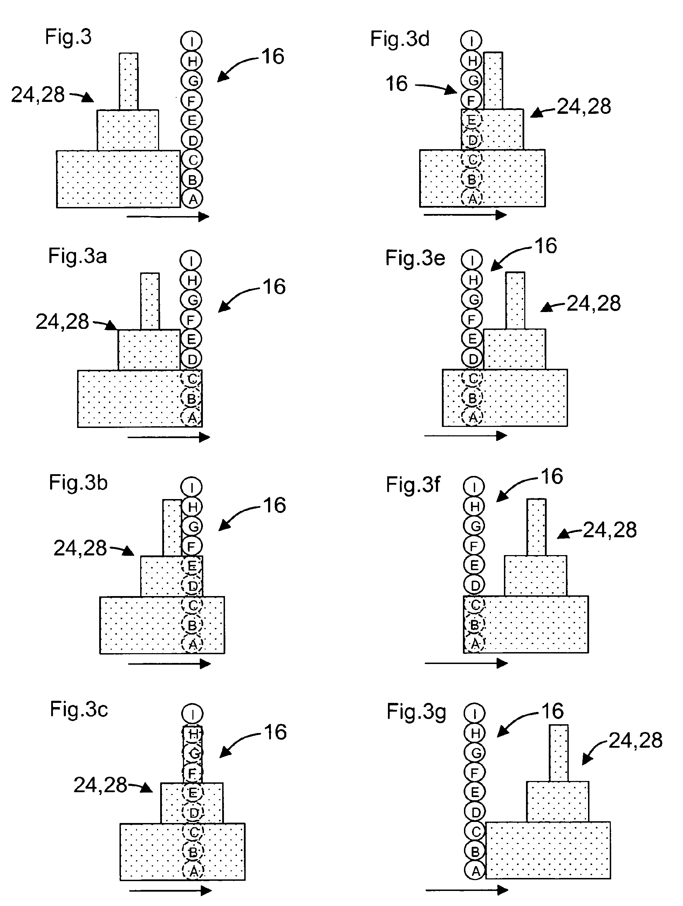

Figur 3 bis 3g zeigt, wie diese Abtastung in der Auswerteeinheit verarbeitet wird. Zunächst wird erläutert wie die Häufigkeit von Referenz-Bitmuster eines Referenzobjektes 28 in einem Teach-in Zyklus eingelernt und abgespeichert wird. Weiter wird erläutert wie ein zulässiges Objekt 24, welches die gleiche Form wie das Referenzobjekt 28 hat, abgetastet wird und die Häufigkeiten der Objekt-Bitmuster mit den Häufigkeiten der Referenz-Bitmuster verglichen werden. Die Objekt-Bitmuster der Lichtstrahlen A bis I des Lichtgitters 16 werden von der Auswerteeinheit zu bestimmten Abtastschritten gemäß der Figuren 3 bis 3g aufgenommen. Das Referenzobjekt 28 und das zulässige Objekt 24 wird dabei in Pfeilrichtung von einem Transportband mit gleichmäßiger Geschwindigkeit bewegt.

Zunächst wird gemäß den Figuren 3 bis 3g der Teach-in Zyklus erläutert, um die Häufigkeiten identischer Referenz-Bitmuster in einem Speicher in dem Lichtgitter abzuspeichern.

Die Lichtstrahlen A bis I des Lichtgitters 16 sind schematisch dargestellt. In Figur 3 sind alle Lichtstrahlen A bis I des Lichtgitters 16 frei, da das Referenzobjekt 28 noch nicht in das Schutzfeld des Lichtgitters 16 eingefahren ist. Im nächsten Schritt, dargestellt in Figur 3a, werden die Lichtstrahlen A bis C durch das Referenzobjekt 28 unterbrochen. Diese Unterbrechung der Lichtstrahlen A bis C wird durch die Auswerteeinheit erfasst und zunächst als Referenz-Bitmuster zwischengespeichert. Nachdem das Referenzobjekt 28 weiter bewegt wird, werden gemäß Figur 3b Lichtstrahlen A bis E des Lichtgitters 16 unterbrochen. Auch diese Unterbrechung der Lichtstrahlen A bis E wird durch die Auswerteeinheit zwischengespeichert. Gemäß Figur 3c findet eine Unterbrechung mit einer maximalen Objekthöhe, nämlich der Lichtstrahlen A bis H statt. Gemäß Figur 3d werden wiederum die ersten fünf Lichtstrahlen A bis E, analog zu Figur 3b, unterbrochen. Gemäß den Figuren 3e und 3f erfolgen jetzt hintereinander in zwei Abtastschritten Unterbrechungen der Lichtstrahlen A bis C. Auch diese Unterbrechungen der Lichtstrahlen A bis C werden von der Auswerteeinheit erfasst. Gemäß der Darstellung der Figur 3g hat das Objekt 24 das Lichtgitter 16 passiert und alle Strahlen des Lichtgitters werden wieder frei. In der Auswerteeinheit wird nun gespeichert, dass ein Referenz-Bitmuster mit den unterbrochenen Lichtstrahlen A bis C insgesamt mit der Häufigkeit "3" vorgekommen ist. Das Referenzbitmuster mit den unterbrochenen Lichtstrahlen A bis E ist insgesamt mit der Häufigkeit "2" vorgekommen und ein Referenz-Bitmuster mit den unterbrochenen Lichtstrahlen A bis H ist insgesamt mit der Häufigkeit "1" vorgekommen.

Ausgehend von einem Normalbetrieb des Lichtgitters wird nun anhand der Figuren 3 bis 3g erläutert, wie ein zulässiges Objekt 24, welches durch das Schutzfeld des Lichtgitters transportiert wird, überprüft wird.

Das zulässige Objekt 24 wird hierzu gemäß den einzelnen Abtastschritten gemäß der Figuren 3 bis 3g abgetastet und das Vorkommen der Objekt-Bitmuster zwischengespeichert. In der Auswerteeinheit wird dann anhand der Häufigkeiten, mit denen die Objekt-Bitmuster auftreten, entschieden, ob es sich bei dem Objekt um ein zulässiges oder unzulässiges Objekt 24 handelt.

Dabei wird beim Durchfahren des Objektes 24 durch das Überwachungsfeld des Lichtgitters 16 festgestellt, dass das Objekt-Bitmuster, mit unterbrochenen Lichtstrahlen A bis C, insgesamt bei drei Abtastschritten (Häufigkeit "3") vorgekommen ist. Eine Strahlunterbrechung der Strahlen A bis E wurde bei zwei Abtastschritten erfasst (Häufigkeit "2") und eine Strahlunterbrechung aller Lichtstrahlen A bis H wurde wiederum nur bei einem einzigen Abtastschritt (Häufigkeit "1") detektiert. Diese Häufigkeiten der Objekt-Bitmuster werden mit den Häufigkeiten der zuvor gespeicherten Häufigkeiten der entsprechenden Referenz-Bitmuster verglichen. Stimmen die Häufigkeiten überein, so kann das zulässige Objekt das Lichtgitter ungehindert passieren und ein Sicherheitssignal wird unterdrückt. Wäre ein Unterschied in einer Häufigkeit erkannt worden, wäre ein Sicherheitssignal ausgelöst und das Transportband abgeschaltet und eine gefahrbringende Bewegung gestoppt worden.

Ergänzend sei erwähnt, dass als Bitmuster jeweils auch nur der oberste unterbrochene oder auch nächstliegende freie Lichtstrahl zwischengespeichert werden kann, um eine Auswertung vorzunehmen.

### Bezugszeichen:

A bis I Lichtstrahlen
10 Transportband
12 Transporteinrichtungen
14 Karosserie
16 Lichtgitter
18 Sendeeinheiten
20 Empfangseinheiten
22 Lichtstrahlen
22a, 22b freie Lichtstrahlen
24 Objekt
26 Schutzfeld
28 Referenzobjekt

## Patentansprüche

1. Verfahren zur Überwachung eines Schutzfeldes (26), durch welches Objekte (14, 24) transportiert werden, bei dem
- das Schutzfeld (26) durch wenigstens ein Lichtgitter (16), mit einer Vielzahl jeweils Sendeelementen und Empfangselementen des Lichtgitters zugeordneten parallelen Lichtstrahlen (22), in einer Ebene quer zur Transportrichtung gebildet wird,
- bei Transport eines Objektes (14, 24) durch das Schutzfeld (26) in zeitlich aufeinander folgenden Abtastschritten die Signale aller Empfangselemente des Lichtgitters (16) aufgenommen werden und die Signale eines Abtastschrittes ein Objekt-Bitmuster bilden,
- Referenz-Bitmuster eines zulässigen Objektes aufgenommen und gespeichert werden,
- und nach Vergleich der Objekt-Bitmuster mit den Referenz-Bitmustern ein Sicherheitssignal vom Lichtgitter (16) ausgegeben wird, wenn die Objekt-Bitmuster des Objektes mit den Referenz-Bitmustern nicht übereinstimmen,
**dadurch gekennzeichnet,**
- **dass** bei Durchgang eines Objektes Häufigkeiten identischer Objekt-Bitmuster von zeitlich aufeinander folgenden Objekt-Bitmustern erfasst und dem jeweiligen Objekt-Bitmuster zugeordnet abgespeichert werden,
- **dass** die so ermittelten Häufigkeiten mit den Häufigkeiten entsprechender identischer Referenz-Bitmuster des zulässigen Objektes (14, 24) verglichen werden und
- das Sicherheitssignal nur dann ausgelöst wird, wenn die ermittelte Häufigkeit nicht mit der Häufigkeit des Referenz-Bitmusters übereinstimmen.

2. Verfahren nach einem der vorhergehenden Ansprüche, **dadurch gekennzeichnet, dass** zur Auswertung eines Objekt-Bitmusters nur ein Teil der Lichtstrahlen (22) berücksichtigt wird, deren Abdeckung sich zwischen zwei Abtastschritten durch das Objekt (14, 24) ändert, wodurch eine Änderung der Signale der entsprechenden Empfangselemente erfolgt.

3. Verfahren nach einem der vorhergehenden Ansprüche, **dadurch gekennzeichnet, dass** für ein Referenzobjekt (28) nur die Häufigkeiten derjenigen Referenz-Bitmuster für den Vergleich herangezogen werden, die den Referenz-Bitmustern an charakteristischen Abtastschritten entsprechen.

4. Verfahren nach einem der vorhergehenden Ansprüche, **dadurch gekennzeichnet, dass** die Referenz-Bitmuster eine Toleranz aufweisen.

5. Verfahren nach einem der vorhergehenden Ansprüche, **dadurch gekennzeichnet, dass** über die Anzahl der zur Erfassung eines Objektes notwendigen Abtastschritte und mit einer bekannten Transportgeschwindigkeit die Länge des Objektes (14, 24) ermittelt wird.

6. Verfahren nach einem der vorhergehenden Ansprüche, **dadurch gekennzeichnet, dass** die Referenz-Bitmuster und die Häufigkeit oder Häufigkeiten identischer Referenz-Bitmuster in einem Teach-in-Zyklus eingelesen, bestimmt und gespeichert werden.

7. Verfahren nach einem der vorhergehenden Ansprüche, **dadurch gekennzeichnet, dass** eine Überbrückungsfunktion vorgesehen ist, um die Sicherheitsfunktion zu überbrücken und keine Sicherheitsfunktion ausgelöst wird.

8. Verfahren nach einem der vorhergehenden Ansprüche, **dadurch gekennzeichnet, dass** Objektdaten zur Objektklassifikation über eine Schnittstelle ausgegeben werden.

9. Vorrichtung zur Überwachung eines Schutzfeldes (26), durch welches Objekte (14, 24) transportiert werden,
- mit wenigstens einem Lichtgitter (16) zur Erzeugung des Schutzfeldes mit einer Vielzahl von Sendeelementen zum Ausenden paralleler Lichtstrahlen in einer Ebene quer zur Transportrichtung und den Sendelementen zugeordneten Empfangselementen zum Empfang der Lichtstrahlen,
- mit einer Auswerteeinheit, mit der beim Transport eines Objektes (14, 24) durch das Schutzfeld (26) in zeitlich aufeinander folgenden Abtastschritten die Signale aller Empfangselemente des Lichtgitters (16) aufgenommen werden und die Signale eines Abtastschrittes ein Objekt-Bitmuster bilden,
- Referenz-Bitmuster eines zulässigen Objektes aufgenommen und in einem Speicher gespeichert werden,
- und nach Vergleich der Objekt-Bitmuster mit den Referenz-Bitmustern ein Sicherheitssignal vom Lichtgitter (16) ausgebbar ist, wenn die Objekt-Bitmuster des Objektes mit den Referenz-Bitmustern nicht übereinstimmen,
**dadurch gekennzeichnet,**
- **dass** die Auswerteeinheit bei Durchgang eines Objektes Häufigkeiten identischer Objekt-Bitmuster von zeitlich aufeinander folgenden Objekt-Bitmustern erfasst und dem jeweiligen Objekt-Bitmuster zugeordnet abspeichert
- und eine Vergleichseinrichtung aufweist, in der die ermittelten Häufigkeiten mit den entsprechenden Häufigkeiten der Referenz-Bitmuster des zulässigen Objektes (14, 24) verglichen werden und
- das Sicherheitssignal ausgebbar ist, wenn die ermittelten Häufigkeiten nicht mit den Häufigkeiten der Referenz-Bitmuster übereinstimmen.

10. Vorrichtung nach Anspruch 10, **dadurch gekennzeichnet, dass** ein Überbrückungstaster vorgesehen ist, um die Sicherheitsfunktion zu überbrücken.

11. Vorrichtung nach Anspruch 10 oder 11, **dadurch gekennzeichnet, dass** eine Schnittstelle zur Ausgabe von Objektdaten zur Objektklassifikation vorgesehen ist.

## Claims

1. A method for monitoring a protection field (26) through which objects (14, 24) are transported, wherein
- the protection field (26) is formed in a plane transverse to the transport direction by at least one light grid (16) having a plurality of parallel light beams (22) each associated with transmission elements and reception elements of the light grid,
- at transport of an object (14, 24) through the protection field (26), the signals of all reception elements of the light grid (16) are captured in chronologically successive sampling steps, and wherein the signals of a sampling step form an object bit pattern,
- reference bit patterns of an admissible object are captured and stored, and
- after a comparison of the object bit patterns and the reference bit patterns a safety signal is output by the light grid (16) if the object bit patterns of the object do not match the reference bit patterns,
**characterized**
- **in that** at the passing of an object, frequencies of identical object bit patterns of chronologically successive object bit patterns are determined and stored associated with the respective object bit pattern,
- **in that** the frequencies determined in this manner are compared with frequencies of corresponding identical reference bit patterns of the admissible object (14, 24),
- and **in that** the safety signal is triggered only in case the frequency as determined does not match the frequency of the reference bit pattern.

2. The method according to any of the preceding claims,
**characterized in that** only a part of the light beams (22) is considered for the evaluation of an object bit pattern whose coverage changes between two sampling steps due to the object (14, 24), resulting in a change of the signals of the corresponding reception elements.

3. The method according to any of the preceding claims,
**characterized in that** for a reference object (28) only frequencies of that reference bit pattern are considered for the comparison that correspond to the reference bit patterns at characteristic sampling steps.

4. The method according to any of the preceding claims,
**characterized in that** the reference bit pattern has a tolerance.

5. The method according to any of the preceding claims,
**characterized in that** by the number of sampling steps necessary to capture an object and with a known transport speed the length of the object (14, 24) is determined.

6. The method according to any of the preceding claims,
**characterized in that** the reference bit pattern and the frequency or frequencies of identical reference bit patterns are read, determined and stored in a teach-in cycle.

7. The method according to any of the preceding claims,
**characterized in that** a bypass function is provided to bypass the safety function and to not trigger a safety function.

8. The method according to any of the preceding claims,
**characterized in that** object data for object classification are output via an interface.

9. An apparatus for monitoring a protection field (26) through which objects (14, 24) are transported,
- with at least one light grid (16) for generating the protection field, the light grid having a plurality of transmission elements for transmitting parallel light beams in a plane transverse to the transport direction and reception elements associated with the transmission elements for reception of the light beams,
- with an evaluation unit to capture the signals of all reception elements of the light grid (16) in chronologically successive sampling steps at the transport of an object (14, 24) through the protection field (26), and wherein the signals of a sampling step form an object bit pattern,
- wherein reference bit patterns of an admissible object are captured and stored in a memory, and
- after a comparison of the object bit patterns and the reference bit patterns a safety signal can be output by the light grid (16) if the object bit patterns of the object do not match the reference bit patterns,
**characterized**
- **in that** the evaluation unit, at the passing of an object, determines frequencies of identical object bit patterns of chronologically successive object bit patterns and stores the frequencies associated with the respective object bit pattern,
- and comprises a comparison device in which the frequencies determined in this manner are compared with the corresponding frequencies of the reference bit patterns of the admissible object (14, 24),
- and **in that** the safety signal can be output in case the frequencies as determined do not match the frequencies of the reference bit patterns.

10. The apparatus according to claim 9,
**characterized in that** a bypass switch is provided to bypass the safety function.

11. The apparatus according to claim 9 or 10,
wherein an interface for the output of object data for an object classification is provided.

## Revendications

1. Procédé pour la surveillance d'une zone de protection (26) à travers lequel des objets (14, 24) sont transportés, dans lequel
- la zone de protection (26) est formée dans un plan transversal à la direction du transport par au moins une barrière de lumière multifaisceau (16) ayant une pluralité des faisceaux lumineux parallèles (22) chacune associée à des éléments de transmission et de réception,
- au transport d'un objet (14, 24) à travers de la zone de protection (26), les signaux de tous les éléments de réception de la barrière de lumière multifaisceau (16) sont capturés dans des étapes d'échantillonnage chronologiquement successives, et les signaux d'une étape d'échantillonnage forment un schéma bit d'objet,
- des schémas bit de référence d'un objet admissible sont capturés et stockés,
- et après une comparaison des schémas bit d'objet avec les schémas bit de référence, un signal de sécurité est sorti par la barrière de lumière multifaisceau (16) si les schémas bit d'objet de l'objet ne correspondent pas aux schémas bit de référence,
**caractérisé en ce que**
- au passage d'un objet, des fréquences des schémas bit d'objet identiques des schémas bit d'objet chronologiquement successives sont capturées et sont mémorisées avec le schéma bit d'objet respectif,
- **en ce que** les fréquences déterminées de cette manière sont comparées avec des fréquences correspondantes aux schémas bit de référence identiques de l'objet admissible (14, 24),
- et **en ce que** le signal de sécurité est déclenché uniquement si la fréquence déterminée ne correspond pas à la fréquence du schéma bit de référence.

2. Procédé selon l'une des revendications précédentes, **caractérisé en ce que** pour l'évaluation d'un schéma bit d'objet seulement une partie des faisceaux de lumière (22) est considérée et l'interruption des faisceaux de lumière par l'objet (14, 24) change entre deux étapes d'échantillonnage et par laquelle un changement des signaux des éléments de réception correspondants résulte.

3. Procédé selon l'une quelconque des revendications précédentes, **caractérisé en ce que** pour un objet de référence (28) seulement les fréquences des schémas bit de référence sont considérées pour la comparaison qui correspondent aux schèmas bit de référence à des étapes d'échantillonnage caractéristiques.

4. Procédé selon l'une des revendications précédentes, **caractérisé en ce que** les schèmas bit de référence ont une tolérance.

5. Procédé selon l'une des revendications précédentes, **caractérisé en ce que** la longueur de l'objet (14, 24) est déterminée par le nombre d'étapes d'échantillonnage nécessaire pour la capture d'un objet et avec une vitesse de transport connue.

6. Procédé selon l'une des revendications précédentes, **caractérisé en ce que** les schémas bit de référence et la ou les fréquences des schémas bit de référence identiques sont lues, déterminées et stockées dans un cycle de teach-in.

7. Procédé selon l'une des revendications précédentes, **caractérisé en ce qu'**une fonction de court-circuitage est fournie pour court-circuiter la fonction de sécurité et de ne pas déclencher une fonction de sécurité.

8. Procédé selon l'une des revendications précédentes, **caractérisé en ce que** des données d'objet pour la classification d'objet sont distribuées via une interface.

9. Dispositif pour la surveillance d'une zone de protection (26) à travers lequel des objets (14, 24) sont transportés,
- avec au moins une barrière de lumière multifaisceau (16) pour générer la zone de protection, la barrière de lumière multifaisceau ayant une pluralité d'éléments de transmission pour transmettre des faisceaux lumineux parallèles dans un plan transversal à la direction de transport et des éléments de réception associés à des éléments de transmission pour la réception des faisceaux de lumière,
- avec une unité d'évaluation pour capter les signaux de tous les éléments de réception de la barrière de lumière multifaisceau (16) dans les étapes d'échantillonnage chronologiquement successives au transport d'un objet (14, 24) à travers le champ de protection (26), et les signaux d'une étape d'échantillonnage forment un schéma bit d'objet,
- des schémas bit de référence d'un objet admissible sont capturés et stockés dans une mémoire, et
- après une comparaison des schéma bit d'objet avec les schéma bit de référence, un signal de sécurité peut être sortie par la barrière de lumière multifaisceau (16) si les schémas bit d'objet de l'objet ne correspondent pas aux schéma bit de référence,
**caractérisé en ce que**
- l'unité d'évaluation, au passage d'un objet, capture des fréquences des schémas bit d'objet identiques des schémas bit d'objet chronologiquement successives et stocke les fréquences avec le schéma bit d'objet respectif,
- et l'unité d'évaluation comprend un dispositif de comparaison dans lequel les fréquences déterminées de cette manière sont comparées avec les fréquences correspondantes aux schémas bit de référence de l'objet admissible (14, 24),
- et **en ce que** le signal de sécurité peut être distribuer si les fréquences déterminées ne correspondent pas aux fréquences des schémas bit de référence.

10. Dispositif selon la revendication 9, **caractérisé en ce qu'**un bouton-poussoir de court-circuitage est fourni pour court-circuiter la fonction de sécurité.

11. Dispositif selon la revendication 9 ou 10, **caractérisé en ce qu'**une interface est fournie pour la distribution des données d'objets pour une classification d'objet.
